# EUROPÄISCHE PATENTSCHRIFT

(11) **EP 1 337 005 B1**
(45) Veröffentlichungstag und Bekanntmachung des Hinweises auf die Patenterteilung: **29.10.2014**
(21) Anmeldenummer: 02405111.2
(22) Anmeldetag: 14.02.2002
(51) Int. Cl.: H01R 9/26

(54) **Sockelabschluss für Stecksockelsystem**
End pieces for plug connector system
Pièces de terminaison pour un système de connecteurs à fiches

(43) Veröffentlichungstag der Anmeldung: 20.08.2003
(73) Patentinhaber: ABB Schweiz AG, 5400 Baden (CH)
(72) Erfinder: Fuchs, Anita, 8240 Thayngen (CH); Ehrensperger, Fritz, 8460 Marthalen (CH); Troller, Marco, 8409 Winterthur (CH)
(74) Vertreter: ABB Patent Attorneys

(56) Entgegenhaltungen:
- EP-A- 0 837 528
- EP-A2- 1 104 047
- DE-U- 7 025 172
- DE-U1- 9 203 172

## Beschreibung

### TECHNISCHES GEBIET

Die vorliegende Erfindung bezieht sich auf das Gebiet der Niederspannungsverteiler des Stecksockeltyps. Sie betrifft einen Sockelabschluss für Stecksockelsysteme gemäss dem Oberbegriff des Patentanspruchs 1 sowie ein Niederspannungs-Stecksockelsystem gemäss dem Oberbegriff des Patentanspruchs 9.

### STAND DER TECHNIK

Niederspannungsverteiler des Stecksockeltyps umfassen ein Stromschienen aufnehmendes Stecksockelsystem, auf welches modularisierte Steckteile, wie Schalt- und Schutzgeräte mit unterschiedlichsten Funktionen, Einspeiseblöcke oder Anschlussklemmen, aufgesteckt werden. Solche Niederspannungsverteiler ermöglichen eine zeit- und kostensparende Planung und Ausführung eines Verteilers und zeichnen sich durch rasche Herstellbarkeit, einfache Einspeisung und problemlose Auswechselbarkeit der Steckteile aus.

Ein derartiges, unter der Bezeichnung "smissline-S" bekanntes Stecksockelsystem mit Überspannungsableiter zur modularen Energieverteilung bis 160 A Nennstrom ist beispielsweise aus der Firmenschrift 20112/B "Überspannungsschutz im System" der Firma ABB CMC Components, Zürich/Schweiz, bekannt. Eine beliebige Anzahl Stecksockelmodule oder -einheiten mit standardisierter Breite können zur gewünschten Stecksockelbreite zusammengefügt werden und bieten Platz für mehr oder weniger Steckteile. Dabei sind die Module so ausgebildet, dass sie beim Zusammenfügen seitlich aneinander gesteckt werden können. Der resultierende Stecksockel wird auf eine an einer Gebäude- oder Schaltkastenwand befestigte, genormte Befestigungsschiene montiert. Anschliessend werden Stromschienen mit einer der resultierenden Stecksockelbreite entsprechenden Länge in den Stecksockel eingebracht.

Das Stecksockelsystem umfasst zumindest einen Hauptsockel zur Aufnahme von sechs Stromschienen für die drei Phasen und einen Neutralleiter sowie zwei Hilfsschienen. Häufig ist ein Zusatzsockel zur Aufnahme von zwei weiteren Stromschienen für aussenliegende Erd- und Neutralleiter vorgesehen. In der Deutschen Offenlegungsschrift DE 199 57 277.1 ist ein derartiger, ebenfalls als Stecksockel ausgebildeter Zusatzsockel offenbart, welcher mittels Schnapphaken auf den Hauptsockel aufgeschnappt werden kann.

Zur elektrischen Isolierung des Stromschienenendes zwecks Berührungsschutz sind aus der genannten Firmenschrift Stecksockelabschlüsse bekannt. Diese müssen je nachdem, ob das System einen Hilfssockel umfasst oder nicht, unterschiedlich montiert werden. Deshalb sind gewisse Positionier- oder Fixierelemente doppelt vorhanden, und die Montage ist entsprechend umständlich.

### DARSTELLUNG DER ERFINDUNG

Aufgabe der vorliegenden Erfindung ist es, einen Sockelabschluss für Stecksockelsysteme anzugeben, welcher einfach montierbar und zur Integration zusätzlicher Funktionen geeignet ist. Diese Aufgabe wird durch einen Sockelabschluss mit den Merkmalen des Patentanspruchs 1 gelöst.

Kern der Erfindung ist es, bei Sockelabschlüssen Positionierungselemente vorzusehen, welche genau eine Lage der Erstgenannten relativ zum Stecksockelsystem eindeutig festlegen, unabhängig davon, ob das System einen Zusatzstecksockel aufweist oder nicht. Da gleichartige Positionierelemente also nicht doppelt vorhanden sind, ist erstens der Sockelabschluss einfacher ausgestaltet, und zweitens ergeben sich bei der Montage keine Verwechslungsprobleme. Durch die eindeutige Position des Sockelabschlusses im montierten Zustand lohnt auch die Integration weiterer Funktionen, zusätzlich zum reinen Berührungsschutz, in den Sockelabschluss. Die dafür erforderlichen zusätzlichen Ausgestaltungen, welche mit dem Stecksockelsystem zusammenwirken, müssen nämlich ebenfalls nur einfach und nicht doppelt vorgesehen sein. Die Sockelabschlüsse decken über die ganze Tiefe des Sockelsystems die Enden der Stromschienen ab und bilden somit einen Berührungsschutz.

In einer ersten Ausführungsform des erfindungsgemässen Sockelabschlusses ist dieser mit Positionierelementen ausgestattet, welche mit dem Stecksockel zusammenwirken. Der Sockelabschluss kann weitere oder alternative Positionierelemente aufweisen, welche eine Befestigung auf einer auch den Stecksockel tragenden Befestigungsschiene ermöglichen.

Zu den weiteren Funktionen, welche ein erfindungsgemässer Sockelabschluss wahrnehmen kann, gehört eine Kriech- und Luftwegverlängerung zwischen benachbarten Stromschienen. Dies wird erreicht durch Stege, welche in die Verlängerung der Stromschienen zu liegen kommen und diese daran hindern, bis ganz auf die Höhe der seitlichen Stirnflächen des Stecksockels zu rutschen. Weiter kann der Sockelabschluss Träger aufweisen, auf welchen eine Verteilerabdeckung montiert werden kann.

Um zu vermeiden, dass der Sockelabschluss bei einem System ohne Zusatzstecksockel über den Hauptstecksockel hinausragt, kann ein über den Hauptstecksockel hinausragender Teil des Sockel-Abschlusses entfernt werden. Dies geschieht auf irreversible Art und Weise, indem ein Stück des Sockel-Abschlusses abgebrochen wird, so dass der verbleibende Teil genau der Tiefe des Hauptstecksockels entspricht.

Weitere vorteilhafte Ausführungsformen gehen aus den abhängigen Patentansprüchen hervor.

### KURZE BESCHREIBUNG DER FIGUREN

Nachfolgend wird die Erfindung anhand von Ausführungsbeispielen im Zusammenhang mit den Zeichnungen näher erläutert. Es zeigen in Schrägaufsicht
- Fig.1: ein Stecksockelsystem mit zwei Sockelabschlüssen,
- Fig.2: eine Aussenseite eines linken Sockelabschlusses,
- Fig.3: eine Innenseite eines rechten Sockelabschlusses, und
- Fig.4: ein Detail eines Stecksockelsystems ohne Steckteil.

Die in den Zeichnungen verwendeten Bezugszeichen sind in der Bezugszeichenliste zusammengefasst. Grundsätzlich sind gleiche Teile mit denselben Bezugszeichen versehen.

### WEGE ZUR AUSFÜHRUNG DER ERFINDUNG

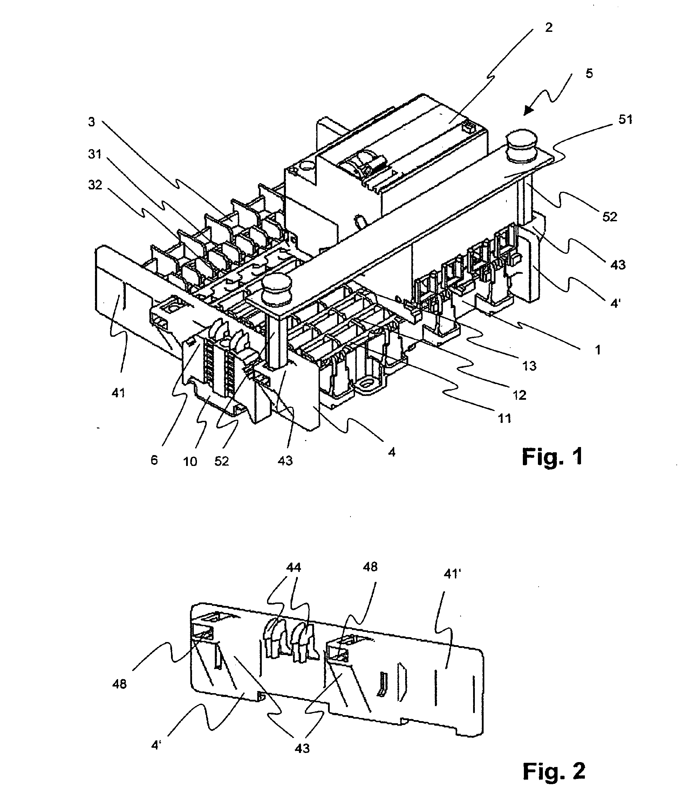

In Fig. 1 ist ein Stecksockelsystem mit einem Hauptstecksockel 1 dargestellt, auf dessen, in der gewählten Perspektive, rechter Hälfte beispielhaft ein einzelnes Schutzgerät 2 aufgesteckt ist, während die linksseitige Hälfte der Steckplätze nicht belegt ist. In Nuten des Sockels 1 sind mehrere Stromschienen 11,12,13 eingefügt, die über die gesamte Breite des Sockels 1 führen und welche mit nicht dargestellten Anschlussklemmen des Schutzgeräts 2 einen Kontakt bilden. Auf der hinteren, dem Betrachter abgewandten Seite des Hauptstecksockels 1 ist ein Zusatzstecksockel 3 mit zwei weiteren Zusatzstromschienen 31,32 dargestellt. Dieser Zusatzstecksockel 3 ist an den Hauptstecksockel 1 angeschnappt. Der Hauptstecksockel 1 ist auf einer Befestigungsschiene 10 befestigt und vorzugsweise aufgeschnappt, kann aber auch direkt an eine Unterlage angeschraubt sein.

An die beiden Stirnseiten des Stecksockelsystems anschliessend, d.h. in Fig.1 links und rechts der Sockel 1,3, ist je ein erfindungsgemässer, in herkömmlicher Spritzgusstechnik gefertigter Sockelabschluss 4,4' angebracht. Da die beiden Stirnseiten des Hauptstecksockels 1 unterschiedlich ausgebildet sind, um ein Aneinanderstecken von zwei oder mehreren Sockelmodulen zu ermöglichen, sind der linksseitige 4 und der rechtsseitige 4' Sockelabschluss nicht genau spiegelsymmetrisch. Die Sockelabschlüsse 4,4' decken über die ganze Tiefe des Sockelsystems die Enden der Stromschienen 11,12,13,31,32 ab und bilden somit einen Berührungsschutz.

Die Position eines Sockelabschlusses 4 relativ zum Hauptstecksockel 1 ist eindeutig festgelegt, d.h. der Sockelabschluss 4 kann nicht in zwei oder mehr, in einer Richtung senkrecht zu den Stromschienen 11,12 unterschiedlichen, Positionen befestigt werden. Für den Fall, dass kein Zusatzstecksockel 3 vorgesehen ist, kann ein, in der Darstellung gemäss Fig.1 dem Betrachter abgewandter, Zusatzabschlussteil 41 des Sockelabschlusses 4 entfernt werden. Dies geschieht geeigneterweise dadurch, dass das besagte, überstehende Zusatzabschlussteil 41 abgebrochen wird, was durch eine entsprechende Ausgestaltung einer Sollbruchstelle als Perforation oder Kerbe erleichtert wird. Die Sollbruchstelle kann auch durch vorgängiges Ritzen mit einem spitzen Gegenstand entsprechend präpariert werden.

Eine dem Hauptstecksockel 1 abgewandte Aussenseite des erfindungsgemässen Sockelabschlusses 4,4' weist erkerförmige Ausformungen als Träger 43 einer Verteilerabdeckung 5 auf. Die Abdeckung des Verteilers beziehungsweise der Steckteile 3 kann zum Schutz letzterer vor Staub oder anderen äusseren Einflüssen vorgesehen sein, oder auch nur aus mehrheitlich optischen Gründen zur Vereinheitlichung des Erscheinungsbildes oder Aufnahme von Beschriftungen. Fig. 1 zeigt eine einfache Ausführung einer derartigen Abdeckung 5, wobei nur ein dem Betrachter zugewandter Teil dargestellt ist, welcher in Form eines rechteckigen Kunststoffteils 51 über die gesamte Stecksockelbreite über eine vordere Schulter der Steckteile 2 verläuft. Zur Abdeckung 5 zu zählen sind zudem Distanzbolzen 52, welche zwischen dem Träger 43 und dem Kunststoffteil 51 angeordnet sind.

Wie in Fig.2 anhand eines in der Terminologie gemäss Fig.1 rechtsseitigen Sockelabschlusses 4' dargestellt, verfügt dieser an seiner Aussenseite über zwei konische Zapfen 44 als erste Positionierelemente. Diese Zapfen 44 können in eine handelsübliche, in Fig.1 ersichtliche, Klemme 6 eingeführt werden, welche Klemme wiederum auf der Befestigungsschiene 10 festgeschraubt und/oder festgeschnappt wird.

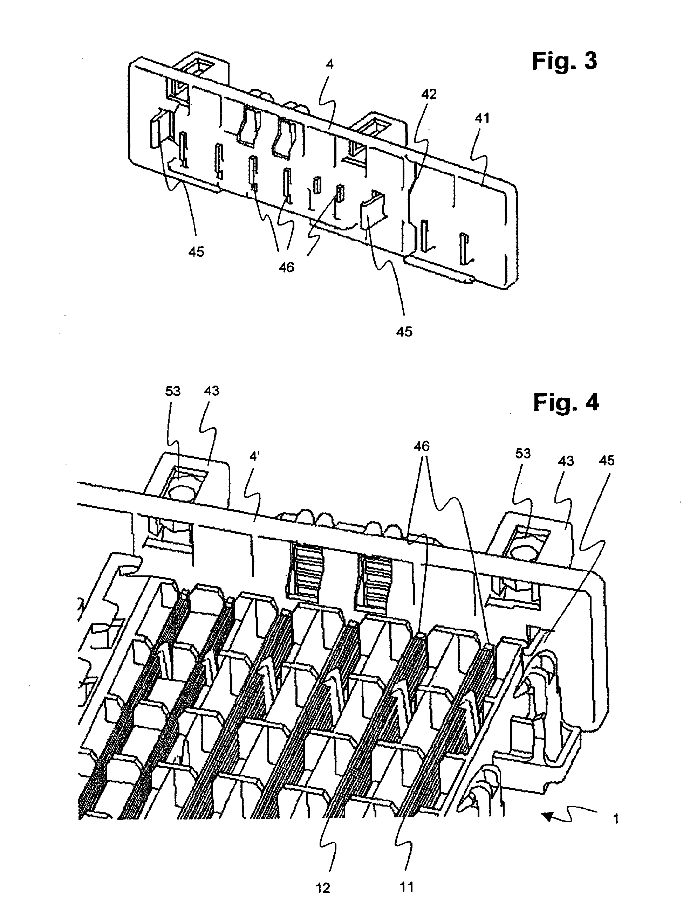

In Fig.3 ist eine dem Hauptstecksockel 1 zugewandte Innenseite eines in der Teminologie gemäss Fig.1 linksseitigen Abschluss 4 dargestellt. Deutlich erkennbar sind Schnapper 45 als weitere Positionierelemente. Diese Schnapper 45 greifen bei der Montage des Sockelabschlusses 4 in entsprechende Nuten oder Schlitze des Hauptstecksockels 1 ein und können mittels eines Schraubendrehers wieder gelöst werden. Zwischen den beiden Schnappern 45 weist der Abschluss 4 sechs Rippen oder Stege 46 auf. Diese kommen im montierten Zustand genau in die Verlängerung der Stromschienen zu liegen. Das durch die Sollbruchstelle 42 abgetrennte Zusatzabschlussteil 41 des Sockelabschlusses 4 weist zwei weitere Rippen 47 auf.

Fig.4 schlussendlich zeigt einen Ausschnitt eines Hauptstecksockels 1 mit einem daneben angeordneten Sockelabschlusses 4', von welchem wiederum die Innenseite, sofern nicht durch den Hauptstecksockel 1 abgedeckt, sichtbar ist. Gut erkennbar ist die Anordnung der Stege 46 in der Verlängerung der Stromschienen 11,12. Durch diese Stege 46 wird der Kriechweg zwischen zwei benachbarten Stromschienen 11,12 über deren kürzesten Abstand hinaus vergrössert und die Gefahr eines Spannungsüberschlags reduziert. Weiter sind in einem entsprechenden Hohlraum der Träger 43 Sechskantmuttern 53 dargestellt. Letztere dienen als Gegenstück für die Distanzbolzen 52 der Abdeckung 5, welche wiederum in die Muttern 53 eingeschraubt werden. Besagte Muttern 53 werden geeigneterweise von der dem Stecksockel abgewandten Seite her in den Hohlraum eingeführt und dort durch eine in Fig.2 erkenntliche Lasche 48 gehalten.

### BEZUGSZEICHENLISTE

- 1: Hauptstecksockel
- 10: Befestigungsschiene
- 11,12,13: Stromschienen
- 2: Schutzgerät
- 3: Zusatzstecksockel
- 31,32: Zusatzstromschienen
- 4,4': Sockelabschluss
- 41: Zusatzsockelabschluss
- 42: Sollbruchstelle
- 43: Träger
- 44: Zapfen
- 45: Schnapper
- 46,47: Rippen
- 48: Lasche
- 5: Verteilerabdeckung
- 51: Kunststoffteil
- 52: Distanzbolzen
- 53: Mutter
- 6: Klemme

## Patentansprüche

1. Sockelabschluss (4,4') angepasst für Niederspannungs-Stecksockelsysteme mit einem Hauptstecksockel (1), welcher zwei seitliche Stirnflächen aufweist, welche unterschiedlich ausgebildet sind, und in welchen Stromschienen (11,12,13) eingelegt sind, und wahlweise einem Zusatzstecksockel (3), in welchen Zusatzstromschienen (31,32) eingelegt sind, wobei der Sockelabschluss (4,4') Positionierelemente (44,45) zur Positionierung des Sockelabschlusses (4,4') neben einer seitlichen Stirnfläche des Hauptstecksockels (1) aufweist,
**dadurch gekennzeichnet, dass** sämtliche Positionierelemente (44,45) genau eine Position des Sockelabschlusses (4,4') relativ zum Hauptstecksockel (1) eindeutig festlegen und dass
der Sockelabschluss (4,4') die Enden der Stromschienen (11,12,13) sowie bei Vorhandensein des Zusatzstecksockels (3) auch die Enden der Zusatzstromschienen (31, 32) über die ganze Tiefe des Stecksockelsystems abdeckt.

2. Sockelabschluss (4,4') nach Anspruch 1, **dadurch gekennzeichnet, dass** ein erstes Positionierelement (45) zur Befestigung des Sockelabschlusses (4,4') am Hauptstecksockel (1) ausgebildet ist.

3. Sockelabschluss (4,4') nach Anspruch 2, **dadurch gekennzeichnet, dass** das erste Positionierelement (45) einen Schnappmechanismus (45) aufweist.

4. Sockelabschluss (4,4') nach Anspruch 1, **dadurch gekennzeichnet, dass** ein zweites Positionierelement (44) angepasst zur Befestigung des Sockelabschlusses (4,4') an einer Klemme (6), welche auf eine Befestigungsschiene (10) montierbar ist, ausgebildet ist, wobei der Hauptstecksockel (1) auf der Befestigungsschiene (10) befestigt ist.

5. Sockelabschluss (4,4') nach Anspruch 4, **dadurch gekennzeichnet, dass** das zweite Positionierelement (44) konische Zapfen (44) aufweist, welche in die Klemme (6) einführbar sind.

6. Sockelabschluss (4,4') nach einem der Ansprüche 1 bis 5, **dadurch gekennzeichnet**, der Hauptstecksockel (1) Nuten aufweist, und dass der Sockelabschluss (4, 4') Rippen oder Stege (46) angepasst zur Kriechwegverlängerung zwischen zwei benachbarten, in die Nuten des Hauptstecksockels (1) eingebrachten Stromschienen (11,12; 12,13), aufweist.

7. Sockelabschluss (4,4') nach einem der Ansprüche 1 bis 5, **dadurch gekennzeichnet, dass** der Sockelabschluss (4,4') Träger (43) zur Aufnahme einer Verteilerabdeckung (5) aufweist.

8. Sockelabschluss (4,4') nach einem der Ansprüche 1 bis 5, **dadurch gekennzeichnet, dass** der Sockelabschluss (4, 4') einen entfernbaren Zusatzsockelabschluss (41), welcher angepasst ist auf den wahlweise zum Stecksockelsystem gehörenden Zusatzstecksockel (3), umfasst.

9. Niederspannungs-Stecksockelsystem, umfassend einen Hauptstecksockel (1) mit zwei seitlichen Stirnflächen, welche unterschiedlich ausgebildet sind, in den Hauptstecksockel (1) eingelegte Stromschienen (11,12,13) und einen Sockelabschluss (4,4') nach einem der Ansprüche 1 bis 8 mit Positionierelementen (44,45) angepasst zur Positionierung des Sockelabschlusses (4,4') neben einer der seitlichen Stirnflächen des Hauptstecksockels (1),
**dadurch gekennzeichnet, dass** genau eine Position des Sockelabschlusses (4,4') relativ zum Hauptstecksockel (1) durch sämtliche Positionierelemente (44,45) eindeutig festgelegt ist.

10. Stecksockelsystem nach Anspruch 9, **dadurch gekennzeichnet, dass** das Stecksockelsystem einen Zusatzstecksockel (3) und darin eingelegte Zusatzstromschienen (31,32) umfasst.

## Claims

1. Base end piece (4, 4') which is suitable for low-voltage plug base systems having a main plug base (1) which has two lateral end faces, which are different, and into which busbars (11, 12, 13) are inserted, and selectively having an auxiliary plug base (3) into which auxiliary busbars (31, 32) are inserted, wherein the base end piece (4, 4') has positioning elements (44, 45) for positioning the base end piece (4, 4') next to a lateral end face of the main plug base (1),
**characterized in that** all of the positioning elements (44, 45) clearly define precisely one position of the base end piece (4, 4') relative to the main plug base (1), and **in that**
the base end piece (4, 4') covers the ends of the busbars (11, 12, 13), and also the ends of the auxiliary busbars (31, 32) when the auxiliary plug base (3) is present, over the entire depth of the plug base system.

2. Base end piece (4, 4') according to Claim 1, **characterized in that** a first positioning element (45) is designed to fasten the base end piece (4, 4') to the main plug base (1).

3. Base end piece (4, 4') according to Claim 2, **characterized in that** the first positioning element (45) has a snap-action mechanism (45).

4. Base end piece (4, 4') according to Claim 1, **characterized in that** a second positioning element (44) is designed to be suitable for fastening the base end piece (4, 4') to a terminal (6), which can be mounted on a fastening rail (10), wherein the main plug base (1) is fastened on the fastening rail (10).

5. Base end piece (4, 4') according to Claim 4, **characterized in that** the second positioning element (44) has conical pins (44) which can be inserted into the terminal (6).

6. Base end piece (4, 4') according to one of Claims 1 to 5, **characterized in that** the main plug base (1) has grooves, and **in that** the base end piece (4, 4') has ribs or webs (46) which are suitable for extending the creepage path between two adjacent busbars (11, 12; 12, 13) which are inserted into the grooves in the main plug base (1).

7. Base end piece (4, 4') according to one of Claims 1 to 5, **characterized in that** the base end piece (4, 4') has supports (43) for holding a distributor cover (5).

8. Base end piece (4, 4') according to one of Claims 1 to 5, **characterized in that** the base end piece (4, 4') comprises a removable auxiliary base end piece (41) which is matched to the auxiliary plug base (3) which selectively belongs to the plug base system.

9. Low-voltage plug base system, comprising a main plug base (1) having two lateral end faces which are different, comprising busbars (11, 12, 13) which are inserted into the main plug base (1), and comprising a base end piece (4, 4') according to one of Claims 1 to 8 having positioning elements (44, 45) which are suitable for positioning the base end piece (4, 4') next to one of the lateral end faces of the main plug base (1), **characterized in that** precisely one position of the base end piece (4, 4') relative to the main plug base (1) is clearly defined by all of the positioning elements (44, 45).

10. Plug base system according to Claim 9, **characterized in that** the plug base system comprises an auxiliary plug base (3) and auxiliary busbars (31, 32) which are inserted into the said auxiliary plug base.

## Revendications

1. Pièce de terminaison (4, 4') prévue pour des système de connecteurs à fiches basse tension, comprenant un connecteur à fiches principal (1) qui présente deux faces frontales latérales qui sont réalisées différemment, dans lesquelles sont installées des barrettes conductrices (11, 12, 13), et au choix un connecteur à fiches supplémentaire (3) dans lequel sont installées des barrettes conductrices supplémentaires (31, 32), la pièce de terminaison (4, 4') présentant des éléments de positionnement (44, 45) pour le positionnement de la pièce de terminaison (4, 4') à côté d'une face frontale latérale du connecteur à fiches principal (1), **caractérisée en ce que** tous les éléments de positionnement (44, 45) fixent univoquement et exactement une position de la pièce de terminaison (4, 4') par rapport au connecteur à fiches principal (1), et **en ce que**
la pièce de terminaison (4, 4') recouvre les extrémités des barrettes conductrices (11, 12, 13) et, en présence du connecteur à fiches supplémentaire (3), également les extrémités des barrettes conductrices supplémentaires (31, 32), sur toute la profondeur du système de connecteur à fiches.

2. Pièce de terminaison (4, 4') selon la revendication 1, **caractérisée en ce qu'**un premier élément de positionnement (45) pour la fixation de la pièce de terminaison (4, 4') est réalisé sur le connecteur à fiches principal (1).

3. Pièce de terminaison (4, 4') selon la revendication 2, **caractérisée en ce que** le premier élément de positionnement (45) présente un mécanisme d'encliquetage (45).

4. Pièce de terminaison (4, 4') selon la revendication 1, **caractérisée en ce qu'**un deuxième élément de positionnement (44) est réalisé de manière adaptée pour fixer la pièce de terminaison (4, 4') à une borne (6) qui peut être montée sur une barrette de fixation (10), le connecteur à fiches principal (1) étant fixé sur la barrette de fixation (10).

5. Pièce de terminaison (4, 4') selon la revendication 4, **caractérisée en ce que** le deuxième élément de positionnement (44) présente des tourillons coniques (44) qui peuvent être introduits dans la borne (6).

6. Pièce de terminaison (4, 4') selon l'une quelconque des revendications 1 à 5, **caractérisée en ce que** le connecteur à fiches principal (1) présente des rainures et **en ce que** la pièce de terminaison (4, 4') présente des ailettes ou des nervures (46) adaptées pour prolonger la ligne de fuite entre deux barrettes conductrices (11, 12 ; 12, 13) adjacentes introduites dans les rainures du connecteur à fiches principal (1).

7. Pièce de terminaison (4, 4') selon l'une quelconque des revendications 1 à 5, **caractérisée en ce que** la pièce de terminaison (4, 4') présente des supports (43) pour recevoir un couvercle de distribution (5).

8. Pièce de terminaison (4, 4') selon l'une quelconque des revendications 1 à 5, **caractérisée en ce que** la pièce de terminaison (4, 4') comprend une pièce de terminaison supplémentaire amovible (41) qui est adaptée au connecteur à fiches supplémentaire (3) appartenant au choix au système de connecteurs à fiches.

9. Système de connecteur à fiches basse tension, comprenant un connecteur à fiches principal (1) comprenant deux faces frontales latérales qui sont réalisées différemment, des barrettes conductrices (11, 12, 13) installées dans le connecteur à fiches principal (1) et une pièce de terminaison (4, 4') selon l'une quelconque des revendications 1 à 8, avec des éléments de positionnement (44, 45) adaptés pour le positionnement de la pièce de terminaison (4, 4') à côté d'une des faces frontales latérales du connecteur à fiches principal (1),
**caractérisé en ce qu'**exactement une position de la pièce de terminaison (4, 4') par rapport au connecteur à fiches principal (1) est fixée univoquement par tous les éléments de positionnement (44, 45).

10. Système de connecteur à fiches selon la revendication 9, **caractérisé en ce que** le système de connecteur à fiches comprend un connecteur à fiches supplémentaire (3) et des barrettes conductrices supplémentaires (31, 32) installées dans celui-ci.
